# EUROPÄISCHE PATENTANMELDUNG

(11) **EP 4 841 123 A1**
(43) Veröffentlichungstag der Anmeldung: **18.11.2026**
(21) Anmeldenummer: 25176701.8
(22) Anmeldetag: 15.05.2025
(51) Int. Cl.: F16C 17/03, F16C 33/10, F03D 80/70, F16C 17/10, F16C 23/04, F16C 33/26

(54) **GLEITLAGERPAD FÜR EINE GLEITLAGERUNG, SOWIE GONDEL FÜR EINE WINDKRAFTANLAGE, SOWIE VERFAHREN ZUM HERSTELLEN EINES GLEITLAGERPADS**

(71) Anmelder: Miba Gleitlager Austria GmbH, 4663 Laakirchen (AT)
(72) Erfinder: ZEH, Christopher, 37434 Obernfeld (DE); LAUBICHLER, Patrick, 4810 Gmunden (AT); HÖLZL, Johannes, 4880 Berg im Attergau (AT)
(74) Vertreter: Burger, Hannes Alfred

(57) **Zusammenfassung**

Die Erfindung betrifft ein Gleitlagerpad (18) für eine Gleitlagerung (9), insbesondere für eine Rotorlagerung (8) einer Windkraftanlage (1), wobei das Gleitlagerpad (18) eine Lagerfläche (20) aufweist. Die Lagerfläche (20) weist einen ersten Lagerflächenabschnitt (35) und einen zweiten Lagerflächenabschnitt (36) auf, wobei der erste Lagerflächenabschnitt (35) deckungsgleich mit einer Lagerflächenhüllkontur (38) liegt und wobei der zweite Lagerflächenabschnitt (36) zur Lagerflächenhüllkontur (38) beabstandet ist.

## Beschreibung

Die Erfindung betrifft ein Gleitlagerpad für eine Gleitlagerung, insbesondere für eine Rotorlagerung einer Windkraftanlage, sowie eine mit dem Gleitlagerpad ausgestattete Gleitlagerung, sowie eine Gondel für eine Windkraftanlage, sowie ein Verfahren zum Herstellen des Gleitlagerpads.

Aus der EP 3 252 306 A1 ist ein Lagerelement für die Lagerung der Rotornabe einer Windkraftanlage bekannt. Die Lagerung weist den Nachteil auf, dass die hydrodynamischen Eigenschaften des Gleitlagerpads nur unzureichend sind und die Gleitlagerung somit eine geringe Effizienz aufweist und darüber hinaus einem erhöhten Verschleiß unterliegt.

Aufgabe der vorliegenden Erfindung war es, verbesserte Gleitlagerpads, sowie eine verbesserte Gleitlagerung, sowie ein einfaches Verfahren zur Herstellung der Gleitlagerpads zur Verfügung zu stellen.

Diese Aufgabe wird durch eine Vorrichtung und ein Verfahren gemäß den Ansprüchen gelöst.

Die Erfindung betrifft ein Gleitlagerpad für eine Gleitlagerung, insbesondere für eine Rotorlagerung einer Windkraftanlage, wobei das Gleitlagerpad eine Lagerfläche aufweist. Die Lagerfläche weist einen ersten Lagerflächenabschnitt und einen zweiten Lagerflächenabschnitt auf, wobei der erste Lagerflächenabschnitt deckungsgleich mit einer Lagerflächenhüllkontur liegt und wobei der zweite Lagerflächenabschnitt zur Lagerflächenhüllkontur beabstandet ist. Der zweite Lagerflächenabschnitt kann als Einziehkeil dienen, um ein hydrodynamisches Lager realisieren zu können. Der erste Lagerflächenabschnitt kann als tragender Lagerflächenabschnitt mit der Gegenfläche eines äußeren Ringelements zusammenwirken. Durch die erfindungsgemäßen Maßnahmen kann eine überraschend effiziente Lagerung erreicht werden.

In einer ersten Ausführungsvariante kann vorgesehen sein, dass die Lagerfläche ausschließlich aus dem erste Lagerflächenabschnitt und dem zweiten Lagerflächenabschnitt besteht. In einer weiteren Ausführungsvariante kann vorgesehen sein, dass die Lagerfläche neben dem ersten Lagerflächenabschnitt und dem zweiten Lagerflächenabschnitt auch weitere Lagerflächenabschnitte umfasst.

Insbesondere kann vorgesehen sein, dass die Gleitlagerpads in einer hydrodynamischen Gleitlagerung eingesetzt werden. Ein hydrodynamisches Gleitlager ist ein Gleitlager, in dem sich der Schmiermittel-Druck bei Betrieb des Lagers an der Stelle, an der die Kraftübertragung zwischen den beiden Lagerteilen erfolgt, selbsttätig bildet. Der Schmieröleinzug ist an dieser Stelle keilförmig. Der Schmierstoff wird von der Oberfläche des bewegten Lagerteils in die Verengung hineingezogen. Dadurch erhöht sich der Druck im Schmierstoff an der Engstelle und die Kraftübertragung kann über den zwischengefügten Schmiermittel-Film erfolgen.

Weiters kann vorgesehen sein, dass die Lagerflächenhüllkontur in einer Axialrichtung eine erste konvexe Krümmung aufweist und in einer Umfangsrichtung eine zweite konvexe Krümmung aufweist. Diese Krümmungen können die Lagerung stabiler und effizienter machen. Insbesondere kann durch die Krümmungen erreicht werden, dass die Lagerung sowohl Radialkräfte, als auch Axialkräfte aufnehmen kann.

Insbesondere kann vorgesehen sein, dass die Lagerflächenhüllkontur einen kontinuierlichen Verlauf aufweist. Insbesondere kann vorgesehen sein, dass die Lagerflächenhüllkontur einen konstanten ersten Radius R in Umfangsrichtung aufweist. Weiters kann vorgesehen sein, dass die Lagerflächenhüllkontur einen konstanten zweiten Radius r in Axialrichtung aufweist.

Mathematisch ausgedrückt bildet die Menge der Punkte mit dem Abstand r von der Kreislinie mit Radius R einen Rotationstorus.

Die Lagerflächenhüllkontur kann verschiedene Grundformen aufweisen. Bei der Grundform eines Torus, umfassend Spindeltorus und Horntorus ist der erste Radius R größer oder gleich dem zweiten Radius r. Bei der Grundform einer Kugel ist der erste Radius R gleich null und der zweite Radius r entspricht dem Kugelradius. Bei der Grundform eines elliptischen Torus ist der erste Radius R kleiner dem zweiten Radius r. Eine Spezialform eines Torus kann auch ein Torus sein, bei dem der zweite Radius r gegen unendlich geht.

Gemäß einer Weiterbildung ist es möglich, dass der zweite Lagerflächenabschnitt zum ersten Lagerflächenabschnitt verkippt ist. Dies kann die Lagerung noch effizienter machen und Reibung reduzieren. Insbesondere kann durch diese Maßnahme erreicht werden, dass sich ein kontinuierlicher Schmieröleinzug aufbauen kann.

Hinsichtlich der Formen des zweiten Lagerflächenabschnittes in Bezug zum ersten Lagerflächenabschnitt gibt es folgende Möglichkeiten: $R 1 , r 1 = R 2 , r 2$ $R 1 , r 1 < R 2 , r 2$ $R 1 , r 1 > R 2 , r 2 .$

Ferner kann vorgesehen sein, dass sich der zweite Lagerflächenabschnitt und der erste Lagerflächenabschnitt an einer Trennkante schneiden. Dies kann die Lagerung optimieren und die Lebensdauer erhöhen, da an der Trennkante das Schmieröl in den ersten Lagerflächenabschnitt eingezogen werden kann und zur Schmierung des ersten Lagerflächenabschnittes dienen kann.

Darüber hinaus kann vorgesehen sein, dass die Trennkante in einem Winkel zwischen 0° und 90°, insbesondere zwischen 5° und 70°, insbesondere zwischen 20° und 60°, bevorzugt zwischen 40° und 50° zur Axialrichtung angeordnet ist. Dieser Winkel kann die Lagerung weiter optimieren und die Effizienz und Lebensdauer überraschenderweise erhöhen. Insbesondere kann durch die winkelige Anordnung der Trennkante erreicht werden, dass kann damit Performance-Einbußen durch Zentrierung bei Lastfällen mit hohem Schub, entgegengewirkt wird.

Vorteilhaft ist auch eine Ausprägung, gemäß welcher vorgesehen sein kann, dass der zweite Lagerflächenabschnitt im Bereich der Trennkante näher an der Lagerflächenhüllkontur angeordnet ist, als in einem von der Trennkante entfernten Bereich, insbesondere dass ein Abstand bis zu einem Gleitlagerpadende kontinuierlich größer wird. Durch diese Maßnahme kann das Schmieröl besonderes effizient in den Bereich des ersten Lagerflächenabschnittes eingezogen werden.

Weiters kann es zweckmäßig sein, wenn die Lagerfläche zur Anlage an einer Gegenfläche eines äußeren Ringelements der Rotorlagerung ausgebildet ist. Dies kann die Lagerung optimieren und die Lebensdauer erhöhen.

Ferner kann vorgesehen sein, dass eine zweite Flächenerstreckung des zweiten Lagerflächenabschnittes zwischen 5% und 110%, insbesondere zwischen 50% und 100%, bevorzugt zwischen 80% und 95% einer ersten Flächenerstreckung des ersten Lagerflächenabschnittes beträgt. Dies bringt den überraschenden Vorteil mit sich, dass durch diese Maßnahme die Lagerung stabiler und effizienter werden kann.

Weiters kann es zweckmäßig sein, wenn die Lagerflächenhüllkontur in Form einer ersten Kugelkalotte mit einem ersten Kugelradius und einem ersten Kugelmittelpunkt ausgebildet ist, wobei der zweite Lagerflächenabschnitt in Form einer zweiten Kugelkalotte mit einem zweiten Kugelradius und einem zweiten Kugelmittelpunkt ausgebildet ist, wobei der erste Kugelmittelpunkt und der zweite Kugelmittelpunkt in einem Abstand zueinander angeordnet sind. Dies bringt den überraschenden Vorteil mit sich, dass durch diese Maßnahme erreicht werden kann, dass eine besonders effiziente Lagerung realisiert werden kann. Insbesondere kann durch die Kugelkalottenform erreicht werden, dass das Lager geringfügig verkippt werden kann, ohne dabei seine Tragfähigkeit zu verlieren.

Ferner kann vorgesehen sein, dass der Abstand des ersten Kugelmittelpunkts und des zweiten Kugelmittelpunkts eine Axialkomponente, eine normal auf die Axialkomponente stehende erste Radialkomponente und eine normal auf die Axialkomponente und erste Radialkomponente stehende zweite Radialkomponente aufweisen. Mit anderen Worten ausgedrückt, können der erste Kugelmittelpunkt und der zweite Kugelmittelpunkt räumlich zueinander verschoben sein. Dies kann die Lagerung stabiler und effizienter machen. Insbesondere kann durch diese Maßnahme erreicht werden, dass die Trennkante in einem Winkel ungleich 90° bzw. ungleich 0° zur Axialrichtung angeordnet ist.

Weiters kann es zweckmäßig sein, wenn der erste Kugelradius und der zweite Kugelradius gleich groß sind. Dies bringt den Vorteil mit sich, dass durch diese Maßnahme die Herstellung des Gleitlagerpads vereinfacht werden kann. Darüber hinaus kann durch diese Maßnahme eine überraschend effiziente Gleitlagerung erreicht werden, da das Schmieröl besonders gut in den ersten Lagerflächenabschnitt eingezogen werden kann.

Ferner kann vorgesehen sein, dass der zweite Lagerflächenabschnitt bezüglich der Lagerflächenhüllkontur nach innen beabstandet ist. Durch diese Maßnahme kann eine effiziente Schmierung des Gleitlagerpads erreicht werden.

Weiters kann vorgesehen sein, dass an einer ersten Umfangsseite des Gleitlagerpads eine Schmieröltransportnut ausgebildet ist, wobei der zweite Lagerflächenabschnitt an die Schmieröltransportnut anschließt. Dies bringt den Vorteil mit sich, dass durch diese Maßnahme Schmieröl einfach von der Schmieröltransportnut in den Schmieröleinzug eingezogen werden kann. Dies führt zu einer überraschenden Verbesserung der Effizienz des Gleitlagers.

Erfindungsgemäß ist eine Gleitlagerung ausgebildet. Die Gleitlagerung umfasst:
- ein inneres Ringelement;
- ein äußeres Ringelement;
- zumindest ein Gleitlagerelement, welches zwischen dem inneren Ringelement und dem äußeren Ringelement angeordnet ist, wobei das Gleitlagerelement zumindest drei Gleitlagerpads, insbesondere zumindest vier Gleitlagerpads, bevorzugt mehr als sechs Gleitlagerpads, umfasst, wobei eine Lagerfläche des Gleitlagerpads und eine Gegenfläche des äußeren Ringelements oder eine Gegenfläche des inneren Ringelementes aneinander anliegen. Das Gleitlagerpad ist nach einer der obigen Ausprägungen ausgebildet. Der zweite Lagerflächenabschnitt kann als Einziehkeil dienen, um ein hydrodynamisches Lager realisieren zu können. Der erste Lagerflächenabschnitt kann als tragender Lagerflächenabschnitt mit der Gegenfläche eines äußeren Ringelements zusammenwirken. Durch die erfindungsgemäßen Maßnahmen kann eine überraschend effiziente Lagerung erreicht werden. Insbesondere kann durch das Vorsehen der Vielzahl von Gleitlagerpads eine effiziente Lagerung erreicht werden.

Definition 1: Eine Homotopie ist eine kontinuierliche Interpolation zwischen Schleifen. Eine Schleife ist eine kontinuierliche Abbildung γ: [0,1]→ X in einen topologischen Raum X. Gegeben γ, γ' definieren wir: $h : \left[0, 1\right] x \left[0, 1\right] \to X$ derart, dass: $h \left(0, t\right) = {x}_{0} ∀ t ∈ \left[0, 1\right]$ $h \left(1, t\right) = {x}_{0} ∀ t ∈ \left[0, 1\right]$ $h \left(s, 0\right) = γ \left(s\right) , h \left(s, 1\right) = γ ′ \left(s\right) ∀ s ∈ \left[0, 1\right]$

Die Menge der Äquivalenzklassen π₁(X, X₀) := {Schleifen am Punkt x₀}/~, wobei für zwei Schleifen γ, γ' gilt, dass γ ~ γ' wenn eine Homotopie h existiert, die beide Schleifen ineinander überführt, kann mit einer Gruppenstruktur versehen werden und wird als Fundamentalgruppe bezeichnet. Dadurch wird die unüberschaubare Menge von Schleifen in X₀ durch Homotopieäquivalenz reduziert.

In einer vorteilhaften Ausführungsform der Erfindung wird die Fundamentalgruppe der Grundform der Lagerfläche gemäß Definition 1 durch die triviale Gruppe beschrieben: ${π}_{1} \left({S}^{2}\right) = \left\{∅\right\}$

In einer weiteren vorteilhaften Ausführungsform der Erfindung wird die Fundamentalgruppe der Grundform der Lagerfläche gemäß Definition 1 durch ${π}_{1} \left({T}^{2}\right) = {π}_{1} \left({S}^{1}\right) x {π}_{1} \left({S}^{1}\right) = ℤ x ℤ$

Wobei 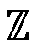 die Gruppe der ganzen Zahlen unter Addition ist. T² ist ein kompakter topologischer Raum, der glatt in ${ℝ}^{3}$ eingebettet werden kann, wobei er die "runde" Standardtopologie, einen entsprechenden Atlas, eine kovariante Ableitung und einen metrischen Tensor erbt.

Erfindungsgemäß werden die Lagerflächenabschnitte durch Hintereinanderausführung von 1-parametrigen Einbettungen Eᵥ und deren Inversen Eᵥ⁻¹ beschrieben, wobei ${E}_{ν} : M \to {ℝ}^{3}$ eine glatte Abbildung zwischen glatten Mannigfaltigkeiten ist, sodass für alle Ausführungsformen ${E}_{{ν}_{2}} E {ν}_{1} - 1 ∘ = {Φ}_{χ} \left({ν}_{1}, {ν}_{2}\right) , \frac{d}{dν} {Φ}_{χ} \left(ν, p\right) = {χ}_{p} \left(ν\right)$

*Φ_{χ}* ist der Fluss des Vektorfeldes χ mit $p ∈ {ℝ}^{3}$.

Die tatsächliche Form der Lagerflächenabschnitte ist durch eine durch *Φ_{χ}* gekennzeichnete Lagetransformation beschrieben, sodass sich entlang eines definierten Vektorfeldes η im ${ℝ}^{3}$ folgende Beziehung ergibt: ( 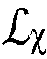 *η̅*)^{a} = 0, 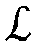 ist die Lie-Ableitung. Die Lagerfläche ist abschnittsweise durch eine Abweichung von der Grundform gekennzeichnet, wobei die Position der Abweichung von der Grundform durch die genannte Einbettung Eᵥ, den daraus resultierenden Fluss *Φ_{χ}* und das Vektorfeld η entsteht.

Naturgemäß sind auch Ausführungsformen denkbar die eine Anzahl i mit $i ∈ ℕ$ derartiger Einbettungen ${E}_{ν}^{i}$ und Vektorfelder ηi kombinieren.

Die Erfindung betrifft außerdem eine Gondel für eine Windkraftanlage, die Gondel umfassend:
- ein Gondelgehäuse;
- eine Rotorwelle;
- eine Rotornabe, welche an der Rotorwelle angeordnet ist;
- eine Rotorlagerung zur Lagerung der Rotorwelle am Gondelgehäuse. Die Rotorlagerung umfasst mehrere Gleitlagerpads. Insbesondere für eine Rotorlagerung eignet sich der erfindungsgemäße Aufbau der Gleitlagerpads besonders gut.

Die Erfindung betrifft auch ein Verfahren zum Herstellen eines Gleitlagerpads, umfassend die Verfahrensschritte:
- Fräsbearbeitung des ersten Lagerflächenabschnittes;
- Fräsbearbeitung des zweiten Lagerflächenabschnittes in einem gesonderten Verfahrensschritt, wobei die Fräsbearbeitung des ersten Lagerflächenabschnittes und die Fräsbearbeitung des ersten Lagerflächenabschnittes in einer gemeinsamen Aufspannung erfolgen. Mittels des erfindungsgemäßen Verfahrens können Gleitlagerpads einfach und effizient hergestellt werden.

Insbesondere kann vorgesehen sein, dass die Fräsbearbeitung des ersten Lagerflächenabschnittes in einem ersten Verfahrensschritt erfolgt. Hierbei kann auch der Bereich des zweiten Lagerflächenabschnittes auf die Lagerflächenhüllkontur bearbeitet werden, welche eine Fortsetzung des ersten Lagerflächenabschnittes ist.

In einem zweiten Verfahrensschritt kann anschließend der zweite Lagerflächenabschnitt auf sein Endmaß bearbeitet werden.

In alternativen Herstellverfahren kann vorgesehen sein, dass metallische Lagerabschnitte durch folgende Herstellverfahren hergestellt werden: Schleifen, (Metall) 3D Druck (SLM, LMD); Laserabtrag, Schmieden. Lagerabschnitte können auch durch folgende Verfahren hergestellt werden: Kunststoff (PEEK), Druckguss, warm Pressen/Umformen.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: eine perspektivische Darstellung eines ersten Ausführungsbeispiels einer Gleitlagerung;
- Fig. 3: eine perspektivische Ansicht eines Längsschnittes des ersten Ausführungsbeispiels der Gleitlagerung;
- Fig. 4: eine Längsschnittdarstellung und eine Querschnittdarstellung eines Ausführungsbeispiels einer Gleitlagerung in einem ersten Betriebszustand;
- Fig. 5: eine Längsschnittdarstellung und eine Querschnittdarstellung eines Ausführungsbeispiels einer Gleitlagerung in einem zweiten Betriebszustand;
- Fig. 6: eine perspektivische Ansicht des ersten Ausführungsbeispiels einer Rotorwelle mit daran angeordneten Gleitlagerpads;
- Fig. 7: eine perspektivische Ansicht eines Gleitlagerpads.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

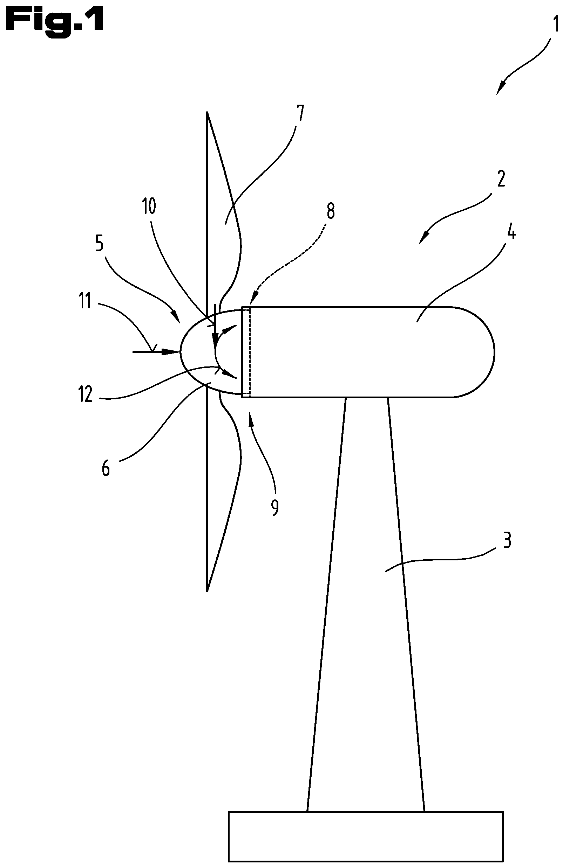

Fig. 1 zeigt in einer schematischen Darstellung ein erstes Ausführungsbeispiel einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen. Insbesondere ist vorgesehen, dass eine erfindungsgemäße und noch näher beschriebene Gleitlagerung 9 als Rotorlagerung 8 eingesetzt wird. Insbesondere kann vorgesehen sein, dass die Rotornabe 6 an einer Rotorwelle 16 angeordnet ist, wobei die Rotorwelle 16 in der Rotorlagerung 8 gelagert ist.

Die Rotorlagerung 8, welche zur Lagerung der Rotornabe 6 am Gondelgehäuse 4 der Gondel 2 dient, ist zur Aufnahme einer Radialkraft 10 und einer Axialkraft 11 ausgebildet. Die Axialkraft 11 ist bedingt durch die Kraft des Windes. Die Radialkraft 10 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 10 ein Kippmoment 12 hervorgerufen. Das Kippmoment 12 kann ebenfalls durch eine ungleichmäßige Belastung der Rotorblätter 7 hervorgerufen werden. Dieses Kippmoment 12 kann mittels einer zweiten Lagerung aufgenommen werden, welche in einem Abstand zur Rotorlagerung 8 angeordnet ist. Die zweite Lagerung kann beispielsweise im Bereich des Generators ausgebildet sein.

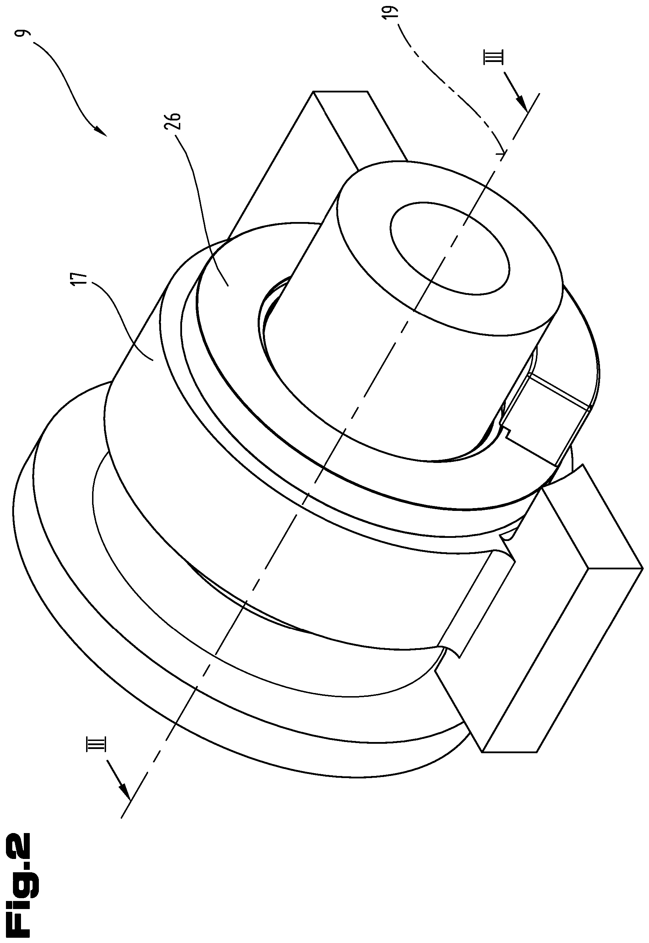

Fig. 2 zeigt ein erstes Ausführungsbeispiel der in der Gondel 2 verbauten Gleitlagerung 9. Natürlich kann die in Fig. 2 dargestellte Gleitlagerung 9 auch in sämtlichen anderen Industrieanwendungen außerhalb von Windkraftanlagen eingesetzt werden. Die Gleitlagerung 9 ist in Fig. 2 in einer perspektivischen Ansicht dargestellt.

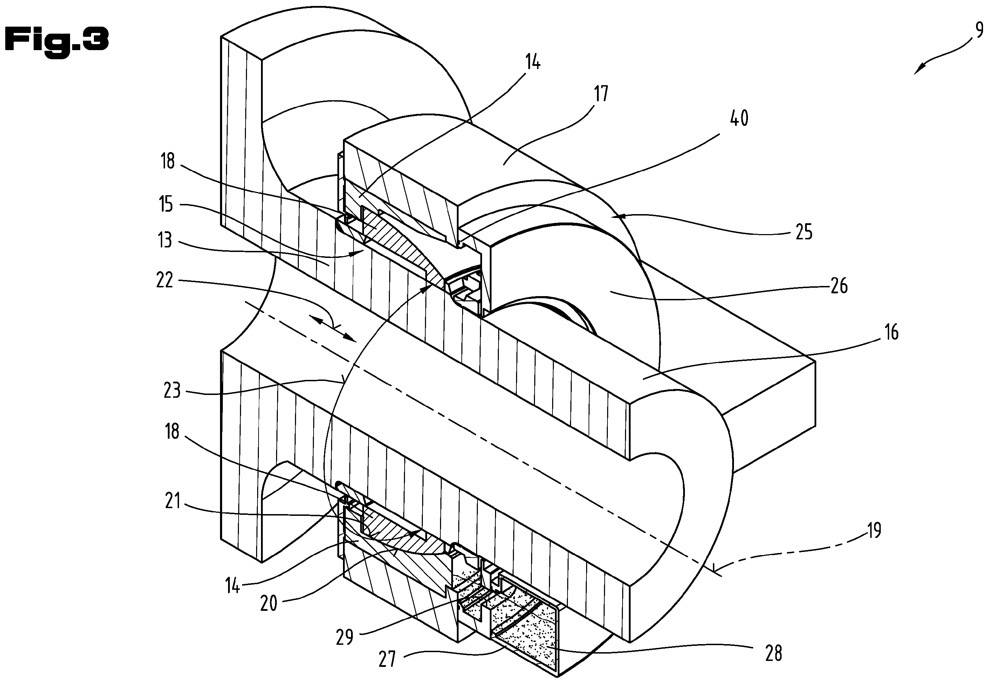

In Fig. 3 ist das erste Ausführungsbeispiel der Gleitlagerung 9 in einer in einer perspektivischen Schnittdarstellung gezeigt.

In weiterer Folge wird die Gleitlagerung 9 anhand einer Zusammenschau der Figuren 2 und 3 beschrieben.

Wie aus den Figuren 2 und 3 ersichtlich, kann vorgesehen sein, dass die Gleitlagerung 9 ein inneres Ringelement 13 und ein äußeres Ringelement 14 aufweist. Zwischen dem inneren Ringelement 13 und dem äußeren Ringelement 14 ist ein Gleitlagerelement 15 angeordnet, welches zur rotatorischen Gleitlagerung des inneren Ringelementes 13 relativ zum äußeren Ringelement 14 dient.

Im Ausführungsbeispiel, welches in den Figuren 2 und 3 dargestellt ist, ist das innere Ringelement 13 als Rotorwelle 16 ausgebildet. Natürlich kann das innere Ringelement 13 auch eine sonstige Welle sein. Weiters ist es auch denkbar, dass das innere Ringelement 13 als eigenständiges Bauteil ausgebildet ist, welches an einer Welle, insbesondere einer Rotorwelle 16 aufgenommen ist.

Wie besonders gut aus Fig. 3 ersichtlich, kann vorgesehen sein, dass das äußere Ringelement 14 in einem Lagerbock 17 aufgenommen ist. Insbesondere kann vorgesehen sein, dass der Lagerbock 17 mit dem Gondelgehäuse 4 gekoppelt ist oder alternativ auch direkt im Gondelgehäuse 4 ausgeformt ist. Bei diesem Ausführungsbeispiel kann somit vorgesehen sein, dass das äußere Ringelement 14 starr mit dem Gondelgehäuse 4 gekoppelt ist und das innere Ringelement 13 mittels des Gleitlagerelementes 15 relativ zum äußeren Ringelement 14 bezüglich einer Rotationsachse 19 verdrehbar ist.

Weiters kann vorgesehen sein, dass der Lagerbock 17 direkt als äußeres Ringelement 14 dient.

Somit ist die Rotorwelle 16 mittels der Gleitlagerung 9 drehbar im Gondelgehäuse 4 aufgenommen.

Wie aus den Figuren 2 und 3 weiters ersichtlich, kann vorgesehen sein, dass das Gleitlagerelement 15 mehrere einzelne Gleitlagerpads 18 umfasst, welche über den Umfang verteilt zwischen dem inneren Ringelement 13 und dem äußeren Ringelement 14 angeordnet sind.

Die einzelnen Gleitlagerpads 18 können, wie im in Fig. 3 gezeigten Aufbau im Betriebszustand der Gleitlagerung 9, fest mit dem inneren Ringelement 13 gekoppelt sein. Somit können sich die einzelnen Gleitlagerpads 18 gemeinsam mit dem inneren Ringelement 13 relativ zum äußeren Ringelement 14 drehen. Um die Drehbewegung zwischen dem inneren Ringelement 13 und dem äußeren Ringelement 14 zu ermöglichen, ist an den einzelnen Gleitlagerpads 18 jeweils eine Lagerfläche 20 ausgebildet. Die Lagerfläche 20 kann im einsatzbereiten Zustand der Gleitlagerung 9 zumindest abschnittsweise an einer Gegenfläche 21 des äußeren Ringelementes 14 anliegen. Die Gegenfläche 21 kann an einer Innenseite 24 des äußeren Ringelements 14 angeordnet sein.

Die Lagerfläche 20 des Gleitlagerpads 18 und die Gegenfläche 21 sind als Gleitflächen ausgebildet, welche im Betrieb der Gleitlagerung 9 aneinander gleiten. Insbesondere kann vorgesehen sein, dass die Gleitlagerung 9 als hydrodynamische Lager ausgebildet ist und im Betrieb der Gleitlagerung 9 zwischen der Lagerfläche 20 des Gleitlagerpads 18 und der Gegenfläche 21 ein Schmierfilm ausgebildet ist, welcher ein effizientes gleiten der Lagerfläche 20 des Gleitlagerpads 18 und der Gegenfläche 21 aneinander ermöglicht. Insbesondere kann hierbei vorgesehen sein, dass sich die Lagerfläche 20 des Gleitlagerpads 18 und die Gegenfläche 21 nicht direkt berühren, sondern durch den Schmierfilm minimal voneinander getrennt sind, sodass es zu keiner Mischreibung kommt.

Insbesondere kann vorgesehen sein, dass die Gegenfläche 21 des äußeren Ringelementes 14 als harte, verschleißfeste Oberfläche ausgebildet ist, welche beispielsweise durch einen gehärteten Stahl gebildet sein kann. Die Lagerfläche 20 des Gleitlagerpads 18 kann aus einem im Vergleich zur Gegenfläche 21 weichen Gleitlagerwerkstoff gebildet sein. Natürlich ist es auch denkbar, dass die Lagerfläche 20 eine Gleitbeschichtung aufweist.

Diese Gleitlagereigenschaften können für das Hochfahren der Gleitlagerung 9 aus dem Stillstand in den Betriebszustand dienen. Hierbei kann reine Gleitreibung bzw. Mischreibung auftreten.

Wie aus Fig. 3 besonders gut ersichtlich, kann vorgesehen sein, dass die einzelnen Gleitlagerpads 18 jeweils eine in Axialrichtung 22 gesehen gewölbte Lagerfläche 20 aufweisen. Natürlich sind die einzelnen Gleitlagerpads 18 auch in einer Umfangsrichtung 23 gewölbt ausgebildet.

Wie aus Fig. 3 weiters ersichtlich, kann vorgesehen sein, dass an einer Axialstirnseite 25 des Lagerbockes 17 ein Deckel 26 angeordnet ist. Der Deckel 26 dient zum Verschließen des Innenraumes des Lagerbockes 17.

Wie aus Fig. 3 weiters ersichtlich, kann vorgesehen sein, dass an dem Deckel 26 ein Schmierölreservoir 27 angeschlossen ist, welches zur Aufnahme von Schmieröl 28 dient. Insbesondere kann hierbei vorgesehen sein, dass im Deckel 26 eine Durchgangsöffnung 29 ausgebildet ist, durch welche das Schmieröl 28 vom Schmierölreservoir 27 in den Innenraum des Lagerbockes 17 strömen kann.

Natürlich ist es auch denkbar, dass das Schmierölreservoir 27 an einer anderen Stelle im Lagerbock 17 angeordnet ist.

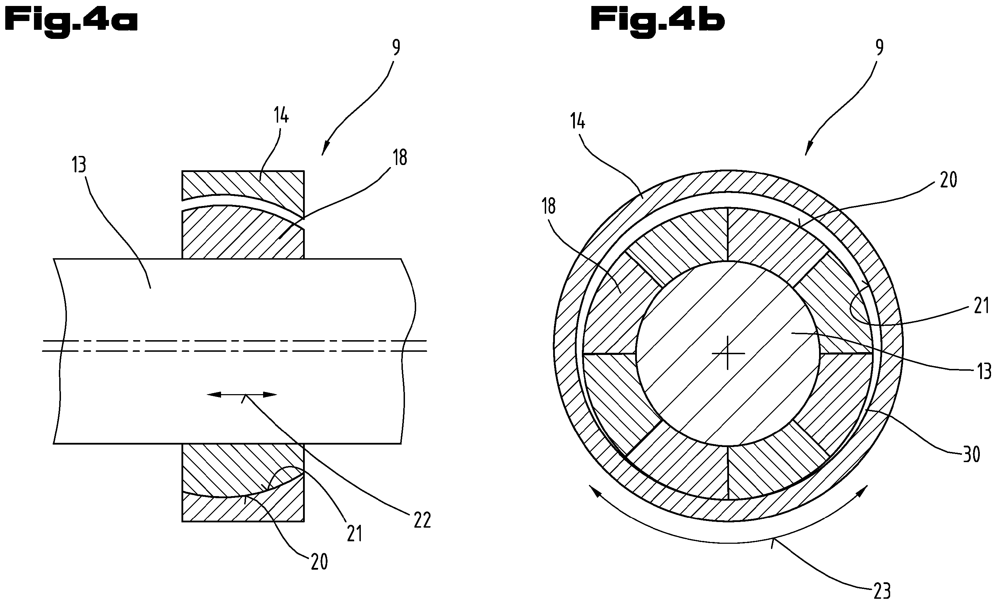

Fig. 4a zeigt eine Längsschnittdarstellung der Gleitlagerung 9. Fig. 4b zeigt eine zugehörige Querschnittdarstellung der Gleitlagerung 9. Für gleiche Teile werden gleiche Bezugszeichen bzw. Bauteilbezeichnungen wie in den vorangegangenen Figuren 1 bis 3 verwendet. Um unnötige Wiederholungen zu vermeiden, wird auf die detaillierte Beschreibung in den vorangegangenen Figuren 1 bis 3 hingewiesen bzw. Bezug genommen.

In den Fig. 4a und 4b ist die Gleitlagerung 9 in einem ersten Betriebszustand dargestellt. Hierbei liegt die Lagerfläche 20 des unteren Gleitlagerpads 18 an der Gegenfläche 21 des äußeren Ringelementes 14 an bzw. sind die Lagerfläche 20 des unteren Gleitlagerpads 18 an der Gegenfläche 21 des äußeren Ringelementes 14 durch einen Schmierfilm geringfügig voneinander beabstandet. Bezüglich der Umfangsrichtung 23 nach oben hin bildet sich beiderseits ein Schmierspalt 30 aus, wie dies besonders gut aus Fig. 4b zu sehen ist. Der Schmierspalt 30 kann dazu dienen, dass bei Rotation der Gleitlagerpads 18 das Schmieröl 28 als Schmierfilm zwischen die Lagerfläche 20 des jeweils unteren Gleitlagerpads 18 und der Gegenfläche 21 eingezogen wird und die Gleitlagerung 9 somit als hydrodynamische Lagerung wirkt.

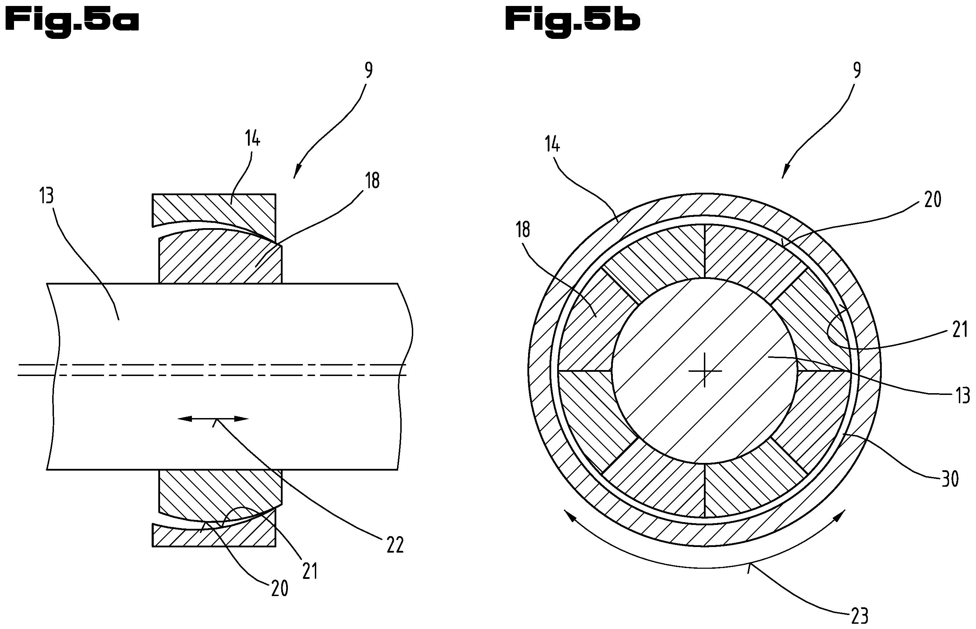

Fig. 5a zeigt eine Längsschnittdarstellung der Gleitlagerung 9. Fig. 5b zeigt eine zugehörige Querschnittdarstellung der Gleitlagerung 9. Für gleiche Teile werden gleiche Bezugszeichen bzw. Bauteilbezeichnungen wie in den vorangegangenen Figuren 1 bis 4 verwendet. Um unnötige Wiederholungen zu vermeiden, wird auf die detaillierte Beschreibung in den vorangegangenen Figuren 1 bis 3 hingewiesen bzw. Bezug genommen.

In den Fig. 5a und 5b ist die Gleitlagerung 9 in einem zweiten Betriebszustand dargestellt, wobei eine hohe Axialkraft auf das innere Ringelement 13 wirkt. Hierbei liegt nicht nur die Lagerfläche 20 des unteren Gleitlagerpads 18 an der Gegenfläche 21 des äußeren Ringelementes 14 an, sondern auch die Lagerfläche 20 der restlichen Gleitlagerpads 18. Durch die hohe Axialkraft zentrieren sich die Gleitlagerpads 18 in der Gegenfläche 21 des äußeren Ringelementes 14. Hierbei bildet sich bezüglich der Umfangsrichtung 23 nach oben hin kein Schmierspalt 30 aus, wie dies besonders gut aus Fig. 5b zu sehen ist. Somit kann in diesem Betriebszustand bei der Verwendung von herkömmlichen Gleitlagerpads 18 bei Rotation der Gleitlagerpads 18 kein Schmieröl 28 zwischen die Lagerfläche 20 des jeweils unteren Gleitlagerpads 18 und der Gegenfläche 21 eingezogen werden, wodurch die Gleitlagerung 9 somit bei der Verwendung von herkömmlichen Gleitlagerpads 18 nicht als hydrodynamische Lagerung wirkt, sondern eine Mischreibung auftritt. Erst bei Verwendung der erfindungsgemäßen Gleitlagerpads 18 kann die Gleitlagerung 9 auch in diesem Fall weiterhin als hydrodynamische Lagerung wirken.

An dieser Stelle sei explizit darauf hingewiesen, dass die Darstellungen der Figuren 4 und 5 schematische Darstellungen sind und die Größenverhältnisse, insbesondere die Spaltmaße, zur besseren Darstellung nicht realitätsgetreu dargestellt sind.

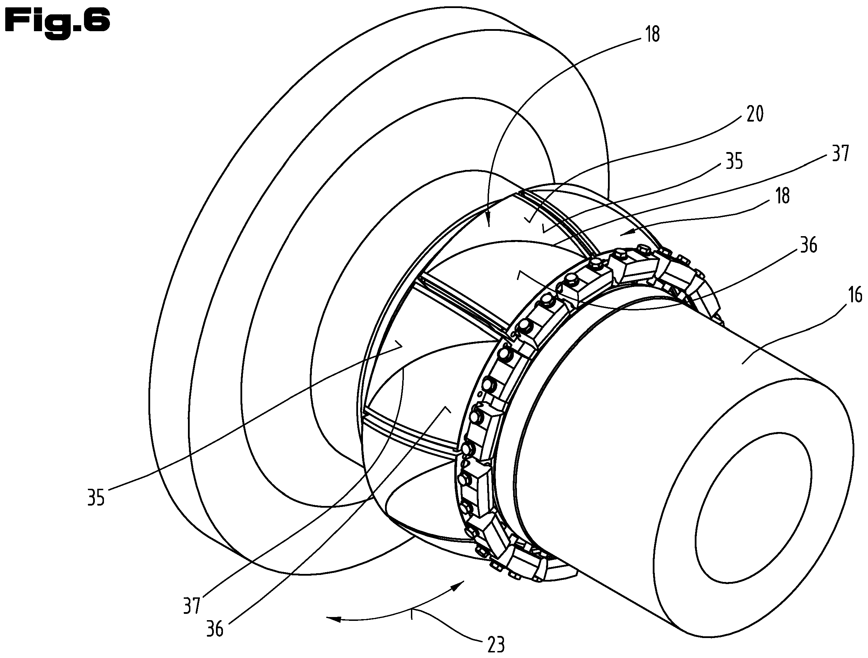

Fig. 6 zeigt die Rotorwelle 16 mit den daran angeordneten Gleitlagerpads 18 in einer perspektivischen Ansicht, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, können die einzelnen Gleitlagerpads 18 in Umfangsrichtung 23 über den Umfang verteilt am inneren Ringelement 14 aufgenommen sein. Insbesondere kann vorgesehen sein, dass die einzelnen Gleitlagerpads 18 in Umfangsrichtung 23 zueinander beabstandet sind. Insbesondere können die einzelnen Gleitlagerpads 18 gemäß der folgenden Detailbeschreibung ausgebildet sein.

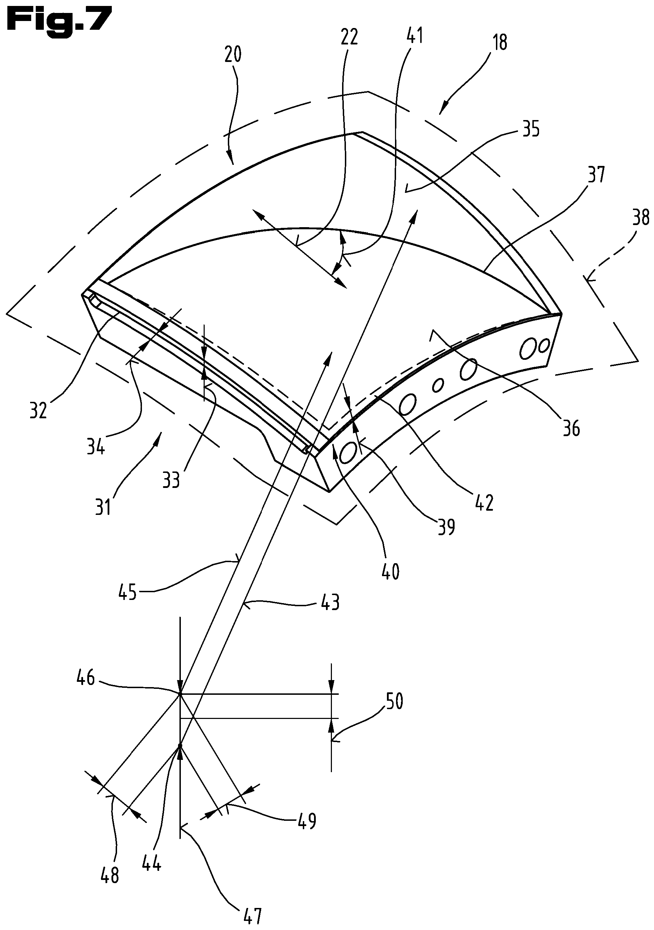

Fig. 7 zeigt ein einzelnes der Gleitlagerpads 18 in einer perspektivischen Ansicht, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich, kann vorgesehen sein, dass an einer ersten Umfangsseite 31 des Gleitlagerpads 18 eine Schmieröltransportnut 32 ausgebildet ist. Die Schmieröltransportnut 32 kann im Bereich der Lagerfläche 20 ausgebildet sein. Insbesondere kann vorgesehen sein, dass die Schmieröltransportnut 32 die Lagerfläche 20 unterbricht.

Wie aus Fig. 7 ersichtlich, kann vorgesehen sein, dass die Schmieröltransportnut 32 eine radiale Nuttiefe 33 aufweist. Weiters kann die Schmieröltransportnut 32 eine umfängliche Nuttiefe 34 aufweisen.

Wie aus Fig. 7 weiters ersichtlich, kann vorgesehen sein, dass die Lagerfläche 20 einen ersten Lagerflächenabschnitt 35 und einen zweiten Lagerflächenabschnitt 36 aufweist. Der erste Lagerflächenabschnitt 35 und der zweite Lagerflächenabschnitt 36 können sich an einer Trennkante 37 schneiden. Weiters kann vorgesehen sein, dass der erste Lagerflächenabschnitt 35 deckungsgleich mit einer Lagerflächenhüllkontur 38 liegt. Darüber hinaus kann vorgesehen sein, dass die Trennkante 37 ebenfalls deckungsgleich mit der Lagerflächenhüllkontur 38 liegt. Die Lagerflächenhüllkontur 38 kann die mit der Gegenfläche 21 korrespondierende Fläche bilden.

Weiters kann vorgesehen sein, dass der zweite Lagerflächenabschnitt 36 ausgehend von der Trennkante 37 in einem immer größer werdenden Abstand 39 zur Lagerflächenhüllkontur 38 angeordnet ist. Insbesondere kann hierbei vorgesehen sein, dass der Abstand 39 im Bereich der Trennkante 37 Null ist und dass der Abstand 39 ausgehend von der Trennkante 37 zum von der Trennkante 37 entfernten Gleitlagerpadende 40 des zweiten Lagerflächenabschnittes 36 kontinuierlich zunimmt. Zur Visualisierung des größer werdenden Abstandes 39 wurde in Fig. 7 die Außenkante des Gleitlagerpads 18 auf die Lagerflächenhüllkontur 38 projiziert und strichliert dargestellt.

Wie aus Fig. 7 weiters ersichtlich, kann vorgesehen sein, dass die Trennkante 37 in einem Winkel 41 zur Axialrichtung 22 ausgebildet ist. Insbesondere kann vorgesehen sein, dass die Trennkante 37 eine räumlich gekrümmte Linie ausbildet. Insbesondere kann somit vorgesehen sein, dass die Winkel 41 über den länglichen Verlauf der Trennkante 37 variiert.

Da die Lagerflächenhüllkontur 38 deckungsgleich mit der Gegenfläche 21 der Gleitlagerung 9 sein kann, kann durch die Formgebung des zweiten Lagerflächenabschnittes 36 ein Schmieröleinzug 42 ausgebildet sein. Insbesondere kann vorgesehen sein, dass der Schmieröleinzug 42 zwischen dem zweiten Lagerflächenabschnitt 36 und der Lagerflächenhüllkontur 38 ausgebildet ist. Durch die Geometrie des Schmieröleinzugs 42 kann das Schmieröl 28 vom Schmieröleinzug 42 zwischen den ersten Lagerflächenabschnitt 35 und die Gegenfläche 21 der Gleitlagerung 9 eingezogen werden. Überraschenderweise wird eine gute Schmierung erst durch die erfindungsgemäße Ausgestaltung des Gleitlagerpads 18 erreicht.

Weiters kann vorgesehen sein, dass der zweite Lagerflächenabschnitt 36 an die Schmieröltransportnut 32 anschließt. Insbesondere kann vorgesehen sein, dass die Schmieröltransportnut 32 in den zweiten Lagerflächenabschnitt 36 einmündet. Dadurch kann erreicht werden, dass das Schmieröl 28 effizient von der Schmieröltransportnut 32 in den Schmieröleinzug 42 eingebracht werden kann.

Wie aus Fig. 6 ersichtlich, kann vorgesehen sein, dass Weiters kann vorgesehen sein, dass der zweite Lagerflächenabschnitt 36 an die Schmieröltransportnut 32 anschließt. Insbesondere kann vorgesehen sein, dass die Schmieröltransportnut 32 in den zweiten Lagerflächenabschnitt 36 einmündet.

Weiters kann vorgesehen sein, dass der erste Lagerflächenabschnitt 35 in Form einer Kugelkalotte ausgebildet ist. Weiters kann vorgesehen sein, dass der zweite Lagerflächenabschnitt 36 in Form einer Kugelkalotte ausgebildet ist. Insbesondere kann vorgesehen sein, dass der erste Lagerflächenabschnitt 35 einen ersten Kugelradius 43 aufweist, welcher von einem ersten Kugelmittelpunkt 44 ausgeht. Weiters kann vorgesehen sein, dass der zweite Lagerflächenabschnitt 36 einen zweiten Kugelradius 45 aufweist, welcher von einem zweiten Kugelmittelpunkt 46 ausgeht.

Insbesondere kann vorgesehen sein, dass der erste Kugelradius 43 und der zweite Kugelradius 45 gleich groß sind. Weiters kann vorgesehen sein, dass der erste Kugelmittelpunkt 44 und der zweite Kugelmittelpunkt 46 in einem Abstand 47 zueinander angeordnet sind. Insbesondere kann vorgesehen sein, dass der Abstand 47 eine Axialkomponente 48, eine erste Radialkomponente 49 und eine zweite Radialkomponente 50 aufweist. Die Axialkomponente 48 kann sich in der Axialrichtung 22 erstrecken. Die erste Radialkomponente 49 kann sich parallel zu einer Umfangsrichtung erstrecken und normal auf die Axialkomponente 48 stehen. Die zweite Radialkomponente 50 kann sich parallel zum ersten Kugelradius 43 erstrecken.

Der erste Kugelmittelpunkt 44 und der zweite Kugelmittelpunkt 46 können somit räumlich zueinander beabstandet angeordnet sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Windkraftanlage | 31 | Umfangsseite |
| 2 | Gondel | 32 | Schmieröltransportnut |
| 3 | Turm | 33 | radiale Nuttiefe |
| 4 | Gondelgehäuse | 34 | umfängliche Nuttiefe |
| 5 | Rotor | 35 | erster Lagerflächenabschnitt |
| 6 | Rotornabe | 36 | zweiter Lagerflächenabschnitt |
| 7 | Rotorblatt | 37 | Trennkante |
| 8 | Rotorlagerung | 38 | Lagerflächenhüllkontur |
| 9 | Gleitlagerung | 39 | Abstand |
| 10 | Radialkraft | 40 | Gleitlagerpadende |
| 11 | Axialkraft | 41 | Winkel |
| 12 | Kippmoment | 42 | Schmieröleinzug |
| 13 | inneres Ringelement | 43 | erster Kugelradius |
| 14 | äußeres Ringelement | 44 | erster Kugelmittelpunkt |
| 15 | Gleitlagerelement | 45 | zweiter Kugelradius |
| 16 | Rotorwelle | 46 | zweiter Kugelmittelpunkt |
| 17 | Lagerbock | 47 | Abstand |
| 18 | Gleitlagerpad | 48 | Axialkomponente |
| 19 | Rotationsachse | 49 | erste Radialkomponente |
| 20 | Lagerfläche | 50 | zweite Radialkomponente |
| 21 | Gegenfläche | | |
| 22 | Axialrichtung | | |
| 23 | Umfangsrichtung | | |
| 24 | Innenseite | | |
| 25 | Axialstirnseite Lagerbock | | |
| 26 | Deckel | | |
| 27 | Schmierölreservoir | | |
| 28 | Schmieröl | | |
| 29 | Durchgangsöffnung | | |
| 30 | Schmierspalt | | |

## Patentansprüche

1. Gleitlagerpad (18) für eine Gleitlagerung (9), insbesondere für eine Rotorlagerung (8) einer Windkraftanlage (1), wobei das Gleitlagerpad (18) eine Lagerfläche (20) aufweist, **dadurch gekennzeichnet, dass**
die Lagerfläche (20) einen ersten Lagerflächenabschnitt (35) und einen zweiten Lagerflächenabschnitt (36) aufweist, wobei der erste Lagerflächenabschnitt (35) deckungsgleich mit einer Lagerflächenhüllkontur (38) liegt und wobei der zweite Lagerflächenabschnitt (36) zur Lagerflächenhüllkontur (38) beabstandet ist.

2. Gleitlagerpad (18) nach Anspruch 1, **dadurch gekennzeichnet, dass** die Lagerflächenhüllkontur (38) in einer Axialrichtung (22) eine erste konvexe Krümmung aufweist und in einer Umfangsrichtung (23) eine zweite konvexe Krümmung aufweist.

3. Gleitlagerpad (18) nach Anspruch 1 oder 2, **dadurch gekennzeichnet, dass** der zweite Lagerflächenabschnitt (36) zum ersten Lagerflächenabschnitt (35) verkippt ist.

4. Gleitlagerpad (18) nach einem der vorhergehenden Ansprüche, **dadurch gekennzeichnet, dass** sich der zweite Lagerflächenabschnitt (36) und der erste Lagerflächenabschnitt (35) an einer Trennkante (37) schneiden.

5. Gleitlagerpad (18) nach Anspruch 4, **dadurch gekennzeichnet, dass** die Trennkante (37) in einem Winkel (41) zwischen 0° und 90°, insbesondere zwischen 5° und 70°, insbesondere zwischen 20° und 60°, bevorzugt zwischen 40° und 50° zur Axialrichtung (22) angeordnet ist.

6. Gleitlagerpad (18) nach Anspruch 4 oder 5, **dadurch gekennzeichnet, dass** der zweite Lagerflächenabschnitt (36) im Bereich der Trennkante (37) näher an der Lagerflächenhüllkontur (38) angeordnet ist, als in einem von der Trennkante (37) entfernten Bereich, insbesondere dass ein Abstand (39) bis zu einem Gleitlagerpadende (40) kontinuierlich größer wird.

7. Gleitlagerpad (18) nach einem der vorhergehenden Ansprüche, **dadurch gekennzeichnet, dass** die Lagerfläche (20) zur Anlage an einer Gegenfläche (21) eines äußeren Ringelements (14) der Rotorlagerung (8) ausgebildet ist.

8. Gleitlagerpad (18) nach einem der vorhergehenden Ansprüche, **dadurch gekennzeichnet, dass** eine zweite Flächenerstreckung des zweiten Lagerflächenabschnittes (36) zwischen 5% und 110%, insbesondere zwischen 50% und 100%, bevorzugt zwischen 80% und 95% einer ersten Flächenerstreckung des ersten Lagerflächenabschnittes (35) beträgt.

9. Gleitlagerpad (18) nach einem der vorhergehenden Ansprüche, **dadurch gekennzeichnet, dass** die Lagerflächenhüllkontur (38) in Form einer ersten Kugelkalotte mit einem ersten Kugelradius (43) und einem ersten Kugelmittelpunkt (44) ausgebildet ist, wobei der zweite Lagerflächenabschnitt (36) in Form einer zweiten Kugelkalotte mit einem zweiten Kugelradius (45) und einem zweiten Kugelmittelpunkt (46) ausgebildet ist, wobei der erste Kugelmittelpunkt (44) und der zweite Kugelmittelpunkt (46) in einem Abstand (47) zueinander angeordnet sind.

10. Gleitlagerpad (18) nach Anspruch 9, **dadurch gekennzeichnet, dass** der Abstand (47) des ersten Kugelmittelpunktes (44) und des zweiten Kugelmittelpunktes (46) eine Axialkomponente (48), eine normal auf die Axialkomponente (48) stehende erste Radialkomponente (49) und eine normal auf die Axialkomponente (48) und erste Radialkomponente (49) stehende zweite Radialkomponente (50) aufweisen.

11. Gleitlagerpad (18) nach Anspruch 9 oder 10, **dadurch gekennzeichnet, dass** der erste Kugelradius (43) und der zweite Kugelradius (45) gleich groß sind.

12. Gleitlagerpad (18) nach einem der vorhergehenden Ansprüche, **dadurch gekennzeichnet, dass** der zweite Lagerflächenabschnitt (36) bezüglich der Lagerflächenhüllkontur (38) nach innen beabstandet ist.

13. Gleitlagerpad (18) nach einem der vorhergehenden Ansprüche, **dadurch gekennzeichnet, dass** an einer ersten Umfangsseite (31) des Gleitlagerpads (18) eine Schmieröltransportnut (32) ausgebildet ist der zweite Lagerflächenabschnitt (36) an die Schmieröltransportnut (32) anschließt.

14. Gleitlagerung (9) umfassend:
- ein inneres Ringelement (13);
- ein äußeres Ringelement (14);
- zumindest ein Gleitlagerelement (15), welches zwischen dem inneren Ringelement (13) und dem äußeren Ringelement (14) angeordnet ist, wobei das Gleitlagerelement (15) zumindest drei Gleitlagerpads (18), insbesondere zumindest vier Gleitlagerpads (18), umfasst,
wobei eine Lagerfläche (20) des Gleitlagerpads (18) und eine Gegenfläche (21) des äußeren Ringelements (14) oder eine Gegenfläche (21) des inneren Ringelementes (13) aneinander anliegen,
**dadurch gekennzeichnet, dass**
das Gleitlagerpad (18) nach einem der Ansprüche 1 bis 13 ausgebildet ist.

15. Gondel (2) für eine Windkraftanlage (1), die Gondel (2) umfassend:
- ein Gondelgehäuse (4);
- eine Rotorwelle (16);
- eine Rotornabe (6), welche an der Rotorwelle (16) angeordnet ist;
- eine Rotorlagerung (8) zur Lagerung der Rotorwelle (16) am Gondelgehäuse (4), **dadurch gekennzeichnet, dass** die Rotorlagerung (8) mehrere Gleitlagerpads (18) nach einem der Ansprüche 1 bis 13 umfasst.

16. Verfahren zum Herstellen eines Gleitlagerpads (18) nach einem der vorhergehenden Ansprüche, umfassend die Verfahrensschritte:
- Fräsbearbeitung des ersten Lagerflächenabschnittes (35);
- Fräsbearbeitung des zweiten Lagerflächenabschnittes (36) in einem gesonderten Verfahrensschritt, wobei die Fräsbearbeitung des ersten Lagerflächenabschnittes (35) und die Fräsbearbeitung des ersten Lagerflächenabschnittes (35), insbesondere in einer gemeinsamen Aufspannung, erfolgen.
